Europäisches Patentamt

European Patent Office

Office européen des brevets

(19)

(11) EP 0 773 139 A2

## EUROPÄISCHE PATENTANMELDUNG

(12)

(43) Veröffentlichungstag:
14.05.1997 Patentblatt 1997/20

(51) Int. Cl.⁶: **B60R 16/02**

(21) Anmeldenummer: 96114107.4

(22) Anmeldetag: 04.09.1996

(84) Benannte Vertragsstaaten:
**AT DE FR GB IT NL SE**

(30) Priorität: **09.11.1995 DE 29517730 U**

(71) Anmelder: **ERICH JAEGER GmbH & Co. KG**
**D-61350 Bad Homburg v.d.H. 1 (DE)**

(72) Erfinder:
• **Wiese, Wolfgang, Dipl.-Ing.**
**D-61273 Wehrheim (DE)**
• **Ruebsam, Carsten, Dipl.-Ing.**
**D-61169 Friedberg-Assenheim (DE)**

(74) Vertreter: **KEIL & SCHAAFHAUSEN**
**Patentanwälte**
**Eysseneckstrasse 31**
**60322 Frankfurt am Main (DE)**

(54) **Steuer- und Überwachungsvorrichtung für Anhängerfunktionen**

(57)     Die Erfindung bezieht sich auf eine Vorrichtung zur Steuerung und Überwachung der Funktionen eines mit einem Zugfahrzeug gekoppelten Anhängers, insbesondere einer Anhängerbeleuchtung, mit einem zugfahrzeugseitigen Signalleitungsanschluß (7), insbesondere zum Verbinden mit einem Bordnetz des Zugfahrzeugs, und mit einem anhängerseitigen Signalleitungsanschluß (9), insbesondere zum Verbinden mit einem Bordnetz des Anhängers. Sie zeichnet sich dadurch aus, daß zur Übertragung von Signalen, insbesondere von Steuer- und/oder Kontrollsignalen zugfahrzeugseitig ein intelligenter Netzknoten (15) und anhängerseitig wenigstens ein intelligenter oder passiver Netzknoten (19, 21) vorgesehen sind, die über Busschnittstellen (13, 23) mit einem gemeinsamen Datenbus (5) verbunden sind, der von einem zentralen Buscontroller (17) verwaltet wird.

EP 0 773 139 A2

## Beschreibung

Die Erfindung betrifft eine Vorrichtung zur Steuerung und Überwachung der Funktionen eines mit einem Zugfahrzeug gekoppelten Anhängers, insbesondere einer Anhängerbeleuchtung, mit einem zugfahrzeugseitigen Signalleitungsanschluß, insbesondere zum Verbinden mit einem Bordnetz des Zugfahrzeugs und mit einem anhängerseitigen Singalleitungsanschluß, insbesondere zum Verbinden mit einem Bordnetz des Anhängers.

Eine derartige Vorrichtung dient der elektrischen Verbindung von Zugfahrzeugen und Anhängern, um die Funktionen des Anhängers, wie bspw. dessen Beleuchtungseinrichtung oder dessen Achslift, vom Zugfahrzeug aus zu steuern. Andererseits müssen auch Signale, insbesondere Kontrollsignale, bspw. einer Bremsbelagsverschleißanzeige, von dem Anhänger zum Zugfahrzeug übertragen werden.

Bei einer bekannten im PKW- und LKW-Bereich verwendeten Vorrichtung wird die Signalübertragung zwischen Zugfahrzeug und Anhänger über bis zu 15-adrige Verbindungskabel realisiert, die Zugfahrzeug und Anhänger elektrisch verbinden. Der zugfahrzeugseitige Singalleitungsanschluß eines solchen Verbindungskabels ist eine entsprechend vielpolige Steckverbindung. Aus der großen Anzahl der Adern resultiert eine ebenso große Anzahl potentieller Störstellen insbesondere im Bereich der lösbaren Steckverbindung. Hieraus folgt bei der bekannten Vorrichtung eine hohe Störanfälligkeit, die zu einem die Sicherheit beeinträchtigenden Ausfall von Funktionen des Anhängers, z.B. der Anhängerbeleuchtung führen kann. Der hohe Leitungsaufwand beschränkt die Datenübertragung zwischen Zugfahrzeug und Anhänger, da die Anzahl verschiedener Signale durch die Anzahl der Adern des elektrischen Kabels begrenzt ist. Mit zunehmendem Ausstattungsstandard der Fahrzeuge wächst der Bedarf, Daten zwischen Zugfahrzeug und Anhänger zu übertragen. Bekannte Vorrichtungen können diesem Bedarf nur mit unverhältnismäßig großem Leitungsaufwand gerecht werden und hemmen so die technische Entwicklung von Anhängern.

In PKWs werden zur Steuerung von elektrischen Verbrauchern, wie der Beleuchtung, bereits Datenbusse eingesetzt, die es ermöglichen, Kabelbäume durch wenige Leitungen zu ersetzen. Solche bekannten Datenbusse sind jedoch für eine lösbare elektrische Verbindung von Zugfahrzeug und Anhänger nicht ohne weiteres geeignet.

Aufgabe der vorliegenden Erfindung ist es, bei einer Vorrichtung der eingangs genannten Art den Leitungsaufwand und damit die Störanfälligkeit durch den Einsatz eines Datenbus zu verringern, der an die Anforderungen einer Zugfahrzeug-Anhänger-Verbindung angepaßt ist.

Diese Aufgabe wird bei einer Vorrichtung der eingangs genannten Art z.B. dadurch gelöst, daß zur Übertragung von Signalen, insbesondere von Steuer- und/oder Kontrollsignalen zugfahrzeugseitig ein intelligenter Netzknoten und anhängerseitig wenigstens ein intelligenter oder passiver Netzknoten vorgesehen sind, die über Busschnittstellen mit einem gemeinsamen Datenbus verbunden sind, der von einem zentralen Buscontroller verwaltet wird.

Eine solche Vorrichtung hat den Vorteil, daß die für den elektrischen Anschluß des Anhängers an das Zugfahrzeug erforderliche Leitungsanzahl erheblich reduziert ist. Dies beruht im wesentlichen darauf, daß Signale bzw. Daten nicht parallel sondern seriell, also zeitlich aufeinanderfolgend, zwischen den Netzknoten im Datenbus übertragen werden. Der intelligente Netzknoten weist einen Mikrocontroller auf, durch den eine Informationsverarbeitung der übertragenen oder zu übertragenden Daten bzw. Signale erfolgen kann. Passive Netzknoten weisen keinen Mikrocontroller auf und können daher eine selbständige Informationsverarbeitung nicht durchführen. Sie können aber auf Anforderung eines intelligenten Netzknotens, auf sogenannte Datenanforderungstelegramme hin, Signale als sogenannte Datentelegramme in dem Datenbus übermitteln. Die Verbindungen zwischen den Netzknoten und dem Datenbus stellen die Busschnittstellen her. Der Datenbus wird durch den zentralen Buscontroller verwaltet, der die serielle Übertragung von Daten bzw. Signalen im Datenbus steuert. Der Vorteil eines zentralen Buscontrollers liegt in der genauen Vorhersagbarkeit der maximalen Übertragungszeiten im Datenbus. Aufgrund der zentralen Buskontrolle können die Netzknoten nicht unkontrolliert im Bus kommunizieren, wodurch der Bus belegt und für die Übertragung sicherheitsrelevanter Informationen blockiert werden kann.

Vorteilhafterweise wandelt der zugfahrerseitige intelligente Netzknoten über den zugfahrzeugseitigen Signalleitungsanschluß eingespeiste parallele Steuersignale in serielle im Datenbus übertragbare Steuersignale um. Parallele Steuersignale aus dem Bordnetz des Zugfahrzeugs, die bspw. der Steuerung der Beleuchtungseinrichtung des Anhängers dienen, können so einfach im Datenbus übertragen werden.

Dadurch, daß der eine intelligente Netzknoten einen Mikrocontroller mit integriertem Buscontroller aufweist, wird der Raumbedarf der Vorrichtung besonders gering gehalten. Außerdem wird die elektromagnetische Verträglichkeit verbessert. Dies ist von großer Bedeutung, da die auftretenden hohen elektromagnetischen Felder die sicherheitsrelevante Funktionszuverlässigkeit der Vorrichtung nicht beeinträchtigen dürfen.

Vorteilhafterweise wandelt der anhängerseitige Netzknoten serielle im Datenbus übertragene Steuersignale in parallele Steuersignale um, die über den anhängerseitigen Signalleitungsanschluß in das Bordnetz des Anhängers einspeisbar sind.

Dadurch, daß anhängerseitig ausschließlich passive Netzknoten vorgesehen sind, werden der notwendige Schaltungsaufwand und die Kosten gering gehalten sowie der Raumbedarf verkleinert. Darüberhinaus werden Kollisionen im Datenbus vermieden, wodurch eine gleichbleibende schnelle Datenübertragung erreicht wird.

Vorteilhafterweise dient ein anhängerseitiger passiver Netzknoten ausschließlich der Übertragung von Kontrollsignalen. Dadurch wird auch die Datenübertragung beschleunigt, da nur ein Datenanforderungstelegramm von dem intelligenten Netzknoten zu den passiven Netzknoten gesendet werden muß, damit alle Kontrollsignale in dem Datenbus übertragen werden. Würden die Kontrollsignale durch mehrere passive Nezknoten übertragen, so müßte der intelligente Netzknoten nacheinander die passiven Netzknoten durch Datenanforderungstelegramme zu einem Absenden von Datentelegrammen auffordern. Auf diese Weise stiege die Anzahl der in dem Datenbus zu übermittelnden Telegramme an, was die Busbelastung und damit die maximale Datenübertragungszeit erhöhte.

Bevorzugt ist der passive Netzknoten ein SLIO-Baustein.

Dadurch, daß die Steuersignale vor Einspeisung in das Bordnetz des Anhängers in einem Signalverstärker verstärkt werden, können die Signale auch dann unmittelbar zum Betrieb elektrischer Einrichtungen verwendet werden, wenn hierfür Strom oder Spannungswerte erforderlich sind, die von dem anhängerseitigen Netzknoten nicht bereitgestellt werden können.

In der Praxis hat sich bewährt, daß der Signalverstärker ein TOPFET ist.

Gemäß einer bevorzugten Ausführungsform der Erfindung wandelt wenigstens einer der anhängerseitigen Netzknoten parallele Kontrollsignale in serielle im Datenbus übertragbare Kontrollsignale um. Dadurch können nicht nur die die Funktionen des Anhängers steuernden Steuersignale, sondern auch aus einer Überwachung der Anhängerfunktionen resultierende Kontrollsignale in demselben Datenbus übertragen werden, ohne daß zusätzliche Leitungen für die Signalübertragung notwendig sind.

Die Kontrollsignale können aber auch durch eine mit dem anhängerseitigen Signalleitungsanschluß und dem anhängerseitigen Netzknoten verbundene Funktionsüberwachungsschaltung erzeugt werden. Durch diese werden am anhängerseitigen Signalleitungsanschluß anliegende Spannungen und/oder Ströme für die Erzeugung der Kontrollsignale verwendet. Unterbrochener Stromfluß am anhängerseitigen Signalleitungsanschluß kann bspw. einen defekten elektrischen Verbraucher, z.B. ein defektes Leuchtmittel, signalisieren.

Vorteilhafterweise erzeugt die Funktionsüberwachungsschaltung das Kontrollsignal durch Strommessung. Sind mehrere Verbraucher an derselben Leitung angeschlossen, so kann aus einem Stromfluß nicht auf ein Funktionieren aller elektrischer Verbraucher geschlossen werden. Da bei Anhängern grundsätzlich beide Bremslichter über dieselbe Leitung versorgt werden, könnte der Defekt nur einer Bremsleuchte nicht festgestellt werden. Durch Strommessung bei bekannten elektrischen Widerständen der Verbraucher kann von dem fließenden Strom auf ein Funktionieren aller oder nur einiger der elektrischen Verbraucher geschlossen werden.

Es hat sich bewährt, einen Richtungsindikatorbaustein zur Strommessung einzusetzen. Durch diesen kann der Strom eines elektrischen Verbrauchers einfach anhand des Spannungsabfalls an einem niederohmigen Widerstand bestimmt werden.

Gemäß einer weiteren Ausgestaltung der Erfindung werden die Kontrollsignale von dem Signalverstärker, insbesondere dem TOPFET erzeugt. Dadurch wird der Schaltungsaufwand und der Raumbedarf verringert.

Gemäß einer weiteren vorteilhaften Ausgestaltung der Erfindung wird das Kontrollsignal durch eine anhängerseitig vorgesehene Spannungsüberwachungsschaltung erzeugt. Durch diese wird die Spannungsversorgung insbesondere des Signalverstärkers überwacht, so daß auch ein solcher Fehler über den Datenbus zum Zugfahrzeug übermittelt werden kann.

Gemäß einer besonders bevorzugten Ausführungsform der Erfindung ist der Datenbus ein CAN (Controller Area-Network)-Bus. Ein solcher ermöglicht den Einsatz kostengünstiger Bausteine.

Bevorzugt weist der Datenbus eine zweiadrige, insbesondere abgeschirmte Busleitung auf. Diese beiden Leitungen genügen, um den Datenaustausch zwischen Zugfahrzeug und Anhänger sicherzustellen und erlauben es, auf vielpolige Leitungsverbindungen zwischen Anhänger und Zugfahrzeug zu verzichten.

Gemäß einer weiteren vorteilhaften Ausgestaltung der Erfindung werden die im Datenbus übertragenen seriellen Kontrollsignale im zugfahrzeugseitigen intelligenten Netzknoten zu parallelen Steuer- und/oder Kontrollsignalen verarbeitet. Diese Signale können über den zugfahrzeugseitigen Signalleitungsanschluß in das Bordnetz des Zugfahrzeugs eingespeist werden. Dort können die Kontrollsignale über Kontrollampen, LCD-Anzeigen oder dgl. angezeigt werden. Die von dem intelligenten Netzknoten erzeugten parallelen Steuersignale können auch direkt für beliebige Steueraufgaben innerhalb der erfindungsgemäßen Vorrichtung verwendet werden.

Vorteilhafterweise sind durch die parallelen Steuersignale elektrische Widerstände über Relais oder dgl. Schalteinrichtung so in den Stromkreis des Zugfahrzeugs schaltbar, daß sie elektrische Widerstände insbesondere der Beleuchtungseinrichtung des Anhängers nachbilden. Dadurch wird es möglich, eine erfindungsgemäße Vorrichtung an herkömmlichen Fahrzeugen mit konventioneller Beleuchtungsanlage nachzurüsten. Solche herkömmlichen Beleuchtungsanlagen weisen Überwachungsschaltungen, wie z.B. eine Anhängerblinküberwachung auf, die dann ansprechen, wenn ein dem jeweiligen elektrischen Verbraucher entsprechender elektrischer Strom fließt. Ein Nachrüsten der erfindungsgemäßen Vorrichtung hat nun zur Folge, daß die entsprechenden Leitungen des Zugfahrzeugbordnetzes nicht mehr mit der elektrischen Last des Verbrauchers belastet werden, sondern nur mit einem Strom der Eingangsschaltung des intelligenten Netzknotens im Milliamperebereich. Die Nachbildung der elektrischen Widerstände der Verbraucher des Anhängers hat zur Folge, daß das Bordnetz des Zugfahrzeugs wie bei einer konventionellen Zugfahrzeug-Anhänger-Verbindung mit der vollen Lampenlast belastet wird. Die Kontrollampen wie die Anhängerblinküberwachung im Zugfahrzeug zeigen ein Funktionieren der Anhängerfunktionen korrekt an, ohne daß eine Veränderung des Bordnetzes des Zugfahrzeugs erforderlich wäre.

Gemäß einer weiteren bevorzugten Ausführungsform der Erfindung erfolgt die Spannungsversorgung des intelligenten Netzknotens durch ein an dem zugfahrzeugseitigen Signalleitungsanschluß eingespeistes Steuersignal. Dadurch wird erreicht, daß die erfindungsgemäße Vorrichtung auch ohne gesonderte Spannungsversorgung betrieben werden kann, sobald ein Signal am zugfahrzeugseitigen Signalleitungsanschluß anliegt.

Gemäß einer Weiterbildung dieses Erfindungsgedankens ist eine Selbsthalteeinrichtung vorgesehen, durch die bei intermittierendem Steuersignal eine ununterbrochene Spannungsversorgung des intelligenten Netzknotens über eine weitere, ständig unter Spannung stehende Versorgungsleitung hergestellt wird. Eine solche Selbsthalteeinrichtung vermeidet den sonst bei intermittierender Spannungsversorgung auftretenden Reset des Mikrocontrollers. Dabei ist es ausreichend, wenn die Selbsthaltedauer im Fall des Warnblinkens der Periodendauer des Blinktaktes entspricht.

Um eine einfache Spannungsversorgung der anhängerseitigen Baugruppe und ggf. weiterer elektrischer Verbraucher des Anhängers zu schaffen, ist vorgesehen, daß die Spannungsversorgung der anhängerseitigen Baugruppe, insbesondere des des Signalverstärkers über eine mit dem Zugfahrzeug verbundene, wenigstens zweiadrige Verbindungsleitung erfolgt.

Vorteilhafterweise ist die Verbindungsleitung dreiadrig, wobei zwei Adern der Spannungsversorgung dienen und eine Ader dem Massekontakt dient. Die doppelte Spannungsversorgung erhöht die Betriebssicherheit der Vorrichtung. Zusammen mit der zweiadrigen Busleitung sind demnach insgesamt nur fünf Leitungen zum elektischen Anschluß des Anhängers erforderlich, anstatt der bei konventioneller Technik üblichen fünfzehn Leitungen. Dennoch sind trotz der geringen Leitungsanzahl Reserven für eine umfangreichere Daten- oder Signalübertragung vorhanden.

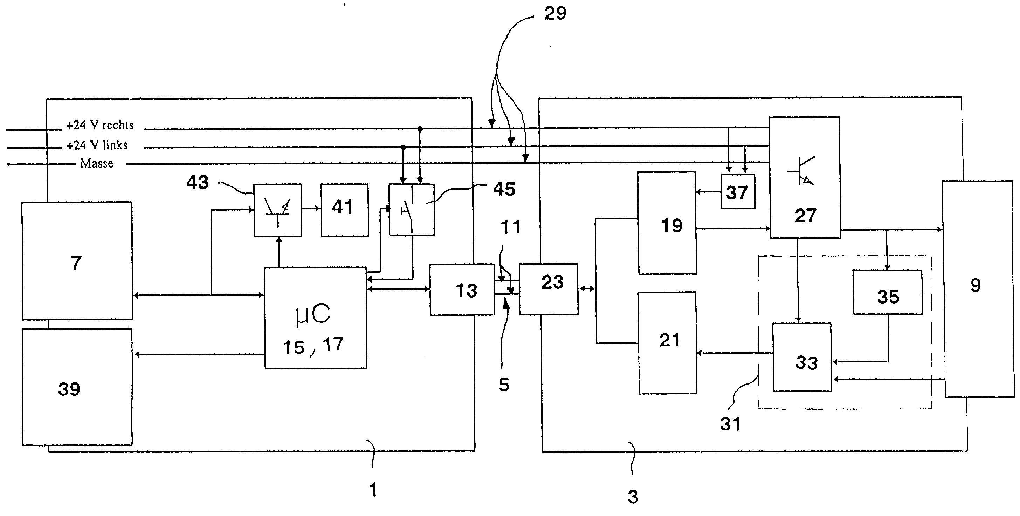

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der Erfindung, auch unabhängig von ihrer Zusammenfassung in den Ansprüchen oder deren Rückbeziehung.

Die einzige Zeichnung zeigt eine schematische Darstellung einer erfindungsgemäßen Vorrichtung zur Steuerung und Überwachung der Funktionen eines mit einem Zugfahrzeug gekoppelten Anhängers. Durch diese können bspw. die Beleuchtungsanlage und der Achslift des Anhängers vom Zugfahrzeug aus gesteuert und überwacht werden. Weitere Steuerungs- oder auch Regelungsaufgaben z.B. eines Anhänger-Antiblockiersystems können aufgrund der großen Datenübertragungskapazität der erfindungsgemäßen Vorrichtung durchgeführt werden.

Die dargestellte Vorrichtung weist eine zugfahrzeugseitige Baugruppe 1 und eine anhängerseitige Baugruppe 3 auf, die über einen Datenbus 5 miteinander elektrisch verbunden sind. Die zugfahrzeugseitige Baugruppe 1 kann über den zugfahrzeugseitigen Signalleitungsanschluß 7 elektrisch mit dem Bordnetz des Zugfahrzeugs verbunden werden. Entsprechend kann die anhängerseitige Baugruppe 3 über den anhängerseitigen Signalleitungsanschluß 9 mit dem Bordnetz des Anhängers verbunden werden. Der Aufbau der Baugruppen 1 und 3 sowie die beiderseitige Datenübertragung zwischen den Baugruppen 1 und 3 bzw. dem Zugfahrzeug und dem Anhänger werden nachfolgend näher beschrieben.

Für die Datenübertragung zwischen den Baugruppen 1 und 3 wird der Datenbus 5 eingesetzt, in dem die Daten oder Signale seriell, d.h. zeitlich aufeinanderfolgend übertragen werden.

Bei dem Datenbus handelt es sich um einen CAN-Bus, der für den automobilen Anwendungsbereich besonders vorteilhaft ist.

An dem Datenbus 5 ist zugfahrzeugseitig über eine Busschnittstelle 13 ein intelligenter Netzknoten 15 angeschlossen. Dieser weist einen Mikrocontroller auf und kann daher beliebige Steuerungs- bzw. Regelungsaufgaben wahrnehmen. So übernimmt der intelligente Netzknoten 15, neben weiteren nachfolgend beschriebenen Aufgaben, auch die Rolle eines zentralen Buscontrollers 17, durch den die Datenübertragung in den Busleitungen 11 verwaltet wird. Die zugfahrzeugseitige Busschnittstelle 13 ist ein sogenanntes Controller-Interface und stellt die physikalische Verbindung zwischen dem intelligenten Netzknoten 15 mit dem Buscontroller 17 und dem Datenbus 5 her.

Anhängerseitig sind mit dem Datenbus 5 zwei passive Netzknoten 19 und 21 über eine gemeinsame Busschnittstelle 23 verbunden. Bei den passiven Netzknoten 19 und 21 handelt es sich um sogenannte SLIO (Serial Linked Input Output)-Bausteine, die keine lokale Intelligenz aufweisen. Die passiven Netzknoten 19 und 21 sind so konfiguriert, daß sie eigenständig keine sogenannten Datentelegramme im Datenbus 5 verschicken können. Der intelligente Netzknoten 15 jedoch kann zu jedem der passiven Netzknoten 19 und 21 Datentelegramme (Data Frames) schicken und über Datenanforderungstelegramme (Remote Frames) das Senden einer bestimmten Nachricht von einem der passiven Netzknoten 19 bzw. 21 anfordern. In gleicher Weise werden die passiven Netzknoten 19 und 21 durch den intelligenten Netzknoten 15 konfiguriert.

Der Datenbus 5 weist zur physikalischen Verbindung der Baugruppen 1 und 3 eine abgeschirmte zweipolige Busleitung 11 auf. Zum Entkoppeln von Zugfahrzeug und Anhänger ist zugfahrzeugseitig eine nicht dargestellte lösbare Steckverbindung in der Busleitung 11 vorgesehen. Zugfahrzeug und Anhänger sind wie bisher durch Lösen der Steckverbindung trennbar, wobei für die gesamte Datenübertragung die zweipolige Busleitung 11 ausreicht.

Wie erwähnt, erfolgt die Datenübertragung in dem Datenbus 5 seriell, so daß trotz der geringen Leitungsanzahl eine große Zahl unterschiedlicher Signale übertragen werden können. Hingegen sind die Bordnetze von Zugfahrzeug und Anhänger in der Regel für parallele Signalübertragung ausgelegt. Deshalb ist es erforderlich, die parallelen Signale vor der Datenübertragung in serielle Signale und diese nach der Datenübertragung wiederum in parallele Signale umzuwandeln. Diese Aufgabe wird durch die Netzknoten 15, 19 und 21 wahrgenommen, die jeweils eine Vielzahl von Eingängen und Ausgängen für parallele Signale aufweisen.

Sollen Steuersignale, die der Steuerung der Anhängerfunktionen dienen, von der erfindungsgemäßen Vorrichtung übertragen werden, so werden diese über den zugfahrzeugseitigen Signalleitungsanschluß 7 eingespeist, der mit den Eingängen für parallele Signale des intelligenten Netzknotens 15 verbunden ist. Das Signal wird von dem intelligenten Netzknoten 15 als Datentelegramm zu dem passiven Netzknoten 19 geschickt, der dieses in ein an einem seiner parallelen Ausgänge anliegendes paralleles Steuersignal umwandelt. Dieses kann über den anhängerseitigen Signalleitungsanschluß in das Bordnetz des Anhängers eingespeist werden. Sollen die Steuersignale z.B. direkt für den Betrieb der Lampen einer Beleuchtungsanlage verwendet werden, werden die Steuersignale in einem Signalverstärker 27 verstärkt, so daß das Steuersignal die gewünschte Spannung erhält und zudem ein ausreichender Stromfluß garantiert wird. Als Signalverstärker 27 wird ein intelligenter Leistungstreiber, ein sogenannter TOPFET-Leistungstreiber verwendet, der auf einer MOSFET-Technologie basiert.

Zur Einspeisung der Steuersignale in das Bordnetz des Anhängers ist der Signalverstärker 27 mit dem anhängerseitigen Signalleitungsanschluß 9 verbunden.

Die Spannungsversorgung des Signalverstärkers 27 erfolgt über mit dem Zugfahrzeug verbundene Verbindungsleitungen 29. Diese weisen drei Adern auf, von denen zwei der Spannungsübertragung dienen und eine die Masseverbindung herstellt. In den Verbindungsleitungen 29 ist, genauso wie in der Busleitung 11, eine nicht dargestellte Steckverbindung vorgesehen, an der die Verbindung getrennt werden kann, wenn Zugfahrzeug und Anhänger entkoppelt werden sollen. Die Verbindungsleitungen 29 können mit der Busleitung 11 zu einer insgesamt fünf-poligen Leitung zusammengefaßt werden, in der eine ebenfalls fünfpolige Steckverbindung vorgesehen ist. An den Verbindungsleitungen 29 können weitere elektrische Verbraucher des Anhängers direkt angeschlossen werden.

Bei konventionellen Datenübertragungsvorrichtungen werden die Beleuchtungseinrichtungen des Anhängers über sogenannte Check-Controllsysteme überwacht, die im Zugfahrzeug angeordnet sind. Dabei werden z.B. die einzelnen Lampenströme der Anhängerbeleuchtungsanlage gemessen und ein Kontrollsignal in Abhängigkeit von diesem Stromfluß erzeugt. Wird für die Datenübertragung gemäß der vorliegenden Erfindung ein Datenbus 5 verwendet, so kann die Funktionsüberwachung und die Kontrollsignalerzeugung nicht mehr im Zugfahrzeug erfolgen. Deshalb ist bei einer erfindungsgemäßen Vorrichtung vorgesehen, daß die Kontrollsignale im Anhänger oder in der anhängerseitigen Baugruppe 3 erzeugt werden und dann über den Datenbus 5 zur zugfahrzeugseitigen Baugruppe 1 übertragen werden.

Über den anhängerseitigen Signalleitungsanschluß 9 eingespeiste parallele Kontrollsignale können direkt auf einen Eingang des passiven Netzknotens 21 geleitet werden, der diese in serielle Steuersignale umwandelt. Diese können dann auf ein Datenanforderungstelegramm des intelligenten Netzknotens 15 über den Datenbus 5 an den intelligenten Netzknoten 15 geschickt werden.

Gemäß der Zeichnung werden die Kontrollsignale in der anhängerseitigen Baugruppe 3 erzeugt. Für die überwiegende Zahl der mit dem anhängerseitigen Signalleitungsanschluß 9 verbundenen elektrischen Verbraucher werden parallele Kontrollsignale durch den Signalverstärker 27, der wie erwähnt, ein intelligenter Leistungstreiber ist, erzeugt. Diese parallelen Kontrollsignale werden dem passiven Netzknoten 21 über eine Anpassungsschaltung 33 zugeführt.

Für die Überwachung der Bremslichtfunktion wird nicht das am Statusausgang des Signalverstärkers 27 anliegende Kontrollsignal verwendet, da sowohl die linke als auch die rechte Bremsleuchte der Beleuchtungsanlage durch eine einzige Versorgungsleitung mit Spannung versorgt werden. Das Kontrollsignal des Signalverstärkers 27 würde nur dann einen Defekt signalisieren, wenn beide Bremsleuchten ausfallen. Auch bei nur einer funktionierenden Bremsleuchte fließt ein hinreichend großer Strom, so daß der Signalverstärker 27 keinen Fehler anzeigt. Um bei nur einer defekten Bremsleuchte dennoch einen Fehler festzustellen, wird ein entsprechendes Kontrollsignal durch eine Bremsleuchtenüberwachung 35 erzeugt. Diese enthält einen Richtungsindikatorbaustein mit einem sehr niederohmigen Widerstand in der zu den in Reihe liegenden Bremsleuchten führenden Leitung. Anhand des Spannungsabfalls an diesem Widerstand, der gemäß der Beziehung $I=U/R$ dem Stromfluß entspricht, wird durch einen IC der Bremsleuchtenüberwachung 35 ein Kontrollsignal generiert, das bei Unterschreitung eines festgelegten Stromwerts einen Defekt anzeigt. Der Stromwert ist dabei so festgelegt, daß bereits dann ein Defekt angezeigt wird, wenn nur eine Bremsleuchte ausfällt.

Ein weiteres Kontrollsignal wird durch die Spannungsüberwachungsschaltung 37 erzeugt, die ebenfalls in der anhängerseitigen Baugruppe 3 angeordnet ist. Durch diese wird die Spannungsversorgung in den Verbindungsleitungen 29 überwacht und ein entsprechendes Kontrollsignal erzeugt, das an einen Eingang des passiven Netzknotens 19 geleitet wird und, wie oben beschrieben, in den Datenbus 5 übertragen werden kann.

Die in dem Datenbus 5 übertragenen seriellen Kontrollsignale werden von dem Mikrocontroller 15 in parallele Kontrollsignale umgewandelt und ggf. für weitere Steuerungs- oder Regelungsaufgaben weiterverarbeitet. Die parallelen Kontrollsignale können über den Kontrollsignalausgang 39 mit TTL-Pegel in das Bordnetz des Zugfahrzeuges eingespeist werden. In einem bspw. im Führerhaus angeordneten LCD-Display können die Kontrollsignale sichtbar gemacht werden.

In herkömmlichen Zugfahrzeugen sind, wie oben erwähnt, sogenannte Check-Controllsysteme vorgesehen, durch die die Funktion der Anhängerbeleuchtungsanlage überwacht wird. Bei einer Nachrüstung einer erfindungsgemäßen Vorrichtung mit einem Datenbus 5 zur Datenübertragung zwischen Zugfahrzeug und Anhänger würde eine solche Funktionsüberwachung ständig einen Defekt signalisieren, da die Leitungen an dem zugfahrzeugseiten Signalleitungsanschluß 9 nur noch mit dem Input-Strom des Mikrocontrollers 15 belastet werden und nicht wie bei herkömmlichen Beleuchtungsanlagen mit Lampenströmen im Ampèrebereich. Um dennoch über ein bei konventionellen Beleuchtungsanlagen vorgesehene Funktionsüberwachung und -anzeige die Funktion, bspw. die der Anhängerbeleuchtungsanlage, anzuzeigen, sind in der zugfahrzeugseitigen Baugruppe 1 elektrische Widerstände 41 vorgesehen, die über eine Schalteinrichtung 43 mit Halbleiterschaltern so an den Stromkreis des Zugfahrzeuges schaltbar sind, daß sie elektrische Widerstände der Beleuchtungseinrichtung des Anhängers nachbilden. Die Schalteinrichtung 43 wird durch Steuersignale betätigt, die von dem Mikrocontroller 15 erzeugt werden. Dieser wertet die von den passiven Netzknoten 19 und 21 erhaltenen Kontrollsignale aus und verarbeitet sie zu parallelen Steuersignalen, die an einem Ausgang des Mikrocontrollers 15 anliegen.

Die Spannungsversorgung der TTL-Bausteine der Vorrichtung, wie z.B. des intelligenten Netzknotens 15 oder der passiven Netzknoten 19 und 21 erfolgt über (nicht dargestellte) Festspannungsregler in der zugfahrzeugseitigen und der anhängerseitigen Baugruppe 1 und 3 mit 5 Volt-Ausgang. Die 24 Volt-Eingangsversorgung des anhängerseitigen Festspannungsreglers erfolgt über die Verbindungsleitungen 29. Die 24 Volt-Eingangsversorgung des zugfahrzeugseitigen Festspannungsreglers erfolgt über eine von der Zündschlüsselstellung abhängige Klemme des Zugfahrzeugs. Die Spannungsversorgung erfolgt gleichzeitig über die am zugfahrzeugseitigen Signalleitungsanschluß 7 eingespeisten Steuersignale, so daß eine Signalübertragung auch dann erfolgen kann, wenn bspw. die Warnblinkeinrichtung eingeschaltet aber die Zündung ausgeschaltet ist. In diesem Fall kommt es zu dem Problem, daß der Mikrocontroller 15 nur im Blinktakt mit Spannung versorgt wird. Aufgrund dieser intermittierenden Spannungsversorgung durch das Steuersignal wird der Mikrocontroller 15 immer wieder neu gestartet, was dazu führt, daß der Mikrocontroller 15 sowie die weiteren passiven Netzknoten 19 und 21 neu konfiguriert werden müssen. Wegen der hierfür erforderlichen Zeitspanne tritt eine sichtbare Signalverzögerung zwischen den Warnleuchten des Zugfahrzeugs und des Anhängers auf. Um dieses ständige Neustarten des Mikrocontrollers 15 zu vermeiden, ist eine Selbsthalteeinrichtung vorgesehen, mittels welcher eine ununterbrochene Spannungsversorgung der Baugruppe 1 nicht mehr, wie im normalen Betriebsmodus, über die von der Zündschlüsselstellung abhängige Klemme, sondern über eine ständig Spannung führende Dauerplus-Versorgungsleitung, hier die Verbindungsleitungen 29, hergestellt wird. Die Verbindung zu den Verbindungsleitungen 29 wird über einen Selbsthalteschalter 45 hergestellt, der durch ein von dem Mikrocontroller 15 erzeugtes Steuersignal betätigt wird. Die Selbsthaltung wird aktiviert, wenn die Zündung ausgeschaltet, also die entsprechende Klemme, die ebenfalls mit einem Eingang des Mikrocontrollers 15 verbunden ist, spannungslos ist und wenn über den zugfahrzeugseitigen Signalleitungsanschluß 7 ein Steuersignal, bspw. des Warnblinkers, eingespeist wird. Dann wird von einem Programm des Mikrocontrollers 15 für eine festgelegte Zeitdauer das den Selbsthalteschalter 45 betätigende Steuersignal erzeugt.

Bezugszeichenliste:

| 1 | zugfahrzeugseitige Baugruppe |
|---|---|
| 3 | anhängerseitige Baugruppe |
| 5 | Datenbus |
| 7 | zugfahrzeugseitiger Signalleitungsanschluß |
| 9 | anhängerseitiger Signalleitungsanschluß |
| 11 | Busleitungen |
| 13 | zugfahrzeugseitige Busschnittstelle |
| 15 | intelligenter Netzknoten, Mikrocontroller |
| 17 | Buscontroller |
| 19 | passiver Netzknoten |
| 21 | passiver Netzknoten |
| 23 | anhängerseitige Busschnittstelle |
| 27 | Signalverstärker |
| 29 | Verbindungsleitungen |
| 31 | Funktionsüberwachungsschaltung |
| 33 | Anpassungsschaltung |
| 35 | Bremsleuchtenüberwachung |
| 37 | Spannungsüberwachungsschaltung |
| 39 | Kontrollsignalausgang |
| 41 | Widerstände |
| 43 | Schalteinrichtung |

45    Selbsthalteschalter

**Patentansprüche**

1.  Vorrichtung zur Steuerung und Überwachung der Funktionen eines mit einem Zugfahrzeug gekoppelten Anhängers, insbesondere einer Anhängerbeleuchtung, mit einem zugfahrzeugseitigen Signalleitungsanschluß (7), insbesondere zum Verbinden mit einem Bordnetz des Zugfahrzeugs, und mit einem anhängerseitigen Signalleitungsanschluß (9), insbesondere zum Verbinden mit einem Bordnetz des Anhängers, **dadurch gekennzeichnet**, daß zur Übertragung von Signalen, insbesondere von Steuer- und/oder Kontrollsignalen zugfahrzeugseitig ein intelligenter Netzknoten (15) und anhängerseitig wenigstens ein intelligenter oder passiver Netzknoten (19, 21) vorgesehen sind, die über Busschnittstellen (13, 23) mit einem gemeinsamen Datenbus (5) verbunden sind, der von einem zentralen Buscontroller (17) verwaltet wird.

2.  Vorrichtung nach Anspruch 1, **dadurch gekennzeichnet**, daß der zugfahrzeugseitige intelligente Netzknoten (15) über den zugfahrzeugseitigen Signalleitungsanschluß (7) eingespeiste parallele Steuersignale in serielle, in dem Datenbus (5) übertragbare Steuersignale umwandelt.

3.  Vorrichtung nach einem der Ansprüche 1 oder 2, **dadurch gekennzeichnet**, daß der zugfahrzeugseitige intelligente Netzknoten (15) einen Mikrocontroller mit integriertem Buscontroller (17) aufweist.

4.  Vorrichtung nach einem der Ansprüche 2 oder 3, **dadurch gekennzeichnet**, daß der anhängerseitige Netzknoten (9) serielle, in dem Datenbus (5) übertragene Steuersignale in parallele Steuersignale umwandelt, die über den anhängerseitigen Signalleitungsanschluß (9) in das Bordnetz des Anhängers einspeisbar sind.

5.  Vorrichtung nach einem der Ansprüche 1 bis 4, **dadurch gekennzeichnet**, daß anhängerseitig ausschließlich passive Netzknoten (19, 21) vorgesehen sind.

6.  Vorrichtung nach einem der Ansprüche 1 bis 5, **dadurch gekennzeichnet**, daß ein anhängerseitiger passiver Netzknoten (21) ausschließlich der Übertragung von Kontrollsignalen dient.

7.  Vorrichtung nach einem der Ansprüche 1 bis 6, **dadurch gekennzeichnet**, daß der passive Netzknoten (19, 21) ein SLIO-Baustein ist.

8.  Vorrichtung nach einem der Ansprüche 1 bis 7, **dadurch gekennzeichnet**, daß die Steuersignale vor Einspeisung in das Bordnetz des Anhängers in einem Signalverstärker (27) verstärkt werden.

9.  Vorrichtung nach Anspruch 8, **dadurch gekennzeichnet**, daß der Signalverstärker (27) ein TOPFET ist.

10. Vorrichtung nach einem der Ansprüche 1 bis 9, **dadurch gekennzeichnet**, daß wenigstens einer der anhängerseitigen Netzknoten (19, 21) parallele Kontrollsignale in serielle, in dem Datenbus (5) übertragbare Kontrollsignale umwandelt.

11. Vorrichtung nach Anspruch 10, **dadurch gekennzeichnet**, daß die Kontrollsignale durch eine mit dem anhängerseitigen Signalleitungsanschluß (9) und dem anhängerseitigen Netzknoten (19, 21) verbundene Funktionsüberwachungsschaltung (31) erzeugt werden.

12. Vorrichtung nach Anspruch 11, **dadurch gekennzeichnet**, daß die Funktionsüberwachungsschaltung (31) das Kontrollsignal durch Strommessung erzeugt.

13. Vorrichtung nach Anspruch 12, **gekennzeichnet durch** einen Richtungsindikatorbaustein zur Strommessung.

14. Vorrichtung nach einem der Ansprüche 10 bis 13, **dadurch gekennzeichnet**, daß die Kontrollsignale von dem Signalverstärker (27), insbesondere dem TOPFET erzeugt werden.

15. Vorrichtung nach einem der Ansprüche 10 bis 14, **dadurch gekennzeichnet**, daß das Kontrollsignal durch eine anhängerseitige Spannungsüberwachungsschaltung erzeugt wird.

16. Vorrichtung nach einem der Ansprüche 1 bis 15, **dadurch gekennzeichnet**, daß der Datenbus (5) ein CAN-Bus ist.

17. Vorrichtung nach einem der Ansprüche 1 bis 16, **dadurch gekennzeichnet**, daß der Datenbus (5) eine zweiadrige, insbesondere abgeschirmte Busleitung (11) aufweist.

18. Vorrichtung nach einem der Ansprüche 10 bis 17, **dadurch gekennzeichnet**, daß die in dem Datenbus (5) übertragenen seriellen Kontrollsignale in dem zugfahrzeugseitigen intelligenten Netzknoten (15) zu parallelen Steuer- und/oder Kontrollsignalen verarbeitet werden.

19. Vorrichtung nach Anspruch 18, **dadurch gekennzeichnet**, daß durch die parallelen Steuersignale elektrische Widerstände (41) über Relais oder dgl. Schalteinrichtungen (43) so in den Stromkreis des Zugfahrzeugs schaltbar sind, daß sie elektrische Widerstände insbesondere der Anhängerbeleuchtung nachbilden.

20. Vorrichtung nach einem der Ansprüche 1 bis 19, **dadurch gekennzeichnet**, daß die Spannungsversorgung des intelligenten Netzknotens (15) durch ein an dem zugfahrzeugseitigen Signalleitungsanschluß (7) eingespeistes Steuersignal erfolgt.

21. Vorrichtung nach Anspruch 20, **gekennzeichnet durch** eine Selbsthalteeinrichtung, durch die bei intermittierendem Steuersignal eine ununterbrochene Spannungsversorgung des intelligenten Netzknotens (15) über eine weitere, ständig unter Spannung stehende Versorgungsleitung hergestellt wird.

22. Vorrichtung nach einem der Ansprüche 1 bis 21, **dadurch gekennzeichnet**, daß die Spannungsversorgung der anhängerseitigen Baugruppe (3), insbesondere des Signalverstärkers (27) über eine mit dem Zugfahrzeug verbundene, wenigstens zweiadrige Verbindungsleitung (29) erfolgt.

23. Vorrichtung nach Anspruch 22, **dadurch gekennzeichnet**, daß die Verbindungsleitung (29) dreiadrig ist, wobei zwei Adern der Spannungsversorgung dienen und eine Ader dem Massenkontakt dient.